# EUROPEAN PATENT SPECIFICATION

(11) **EP 3 703 518 B1**
(45) Date of publication and mention of the grant of the patent: **31.07.2024**
(21) Application number: 18800272.9
(22) Date of filing: 31.10.2018
(51) Int. Cl.: A24B 15/16

(54) **AEROSOLISABLE FORMULATION**
AEROSOLIERBARE FORMULIERUNG
FORMULATION AÉROSOLISABLE

(30) Priority: 01.11.2017 GB 201718035
(43) Date of publication of application: 09.09.2020
(73) Proprietor: Nicoventures Trading Limited, London WC2R 3LA (GB)
(72) Inventor: DICKENS, Colin, London WC2R 3LA (GB); CABOT, Ross, London WC2R 3LA (GB); NICOL, James, London WC2R 3LA (GB)
(74) Representative: D Young & Co LLP
(86) International application number: PCT/GB2018/053138
(87) International publication number: WO 2019/086858

(56) References cited:
- EP-A1- 0 774 978
- WO-A2-2007/138462
- US-A1- 2001 009 660
- US-A1- 2016 198 759
- US-A1- 2017 231 996

## Description

### FIELD OF THE INVENTION

The present disclosure relates to an aerosolisable formulation, containers in which are contained the aerosolisable formulation and to electronic aerosol provision systems such as electronic aerosol delivery systems (e.g. e-cigarettes) incorporating said formulation.

### BACKGROUND TO THE INVENTION

Electronic vapour provision systems such as e-cigarettes generally contain a reservoir of liquid which is to be vaporised, typically containing nicotine. When a user inhales on the device, a heater is activated to vaporise a small amount of liquid, which is therefore inhaled by the user.

The use of e-cigarettes in the UK has grown rapidly, and it has been estimated that there are now almost three million people using them in the UK.

Current e-cigarette formulations utilise components such as glycerol and/or propylene glycol as the excipient substances.

Furthermore, e-cigarette formulations may comprise hydrophobic flavour components such as menthol which necessitate use of solvents such as ethanol to achieve full miscibility with the excipient components and water. Flavours like these tend to be volatile, and vaporise readily in the presence of heat. The inherent problem with this is that current e-cigarette devices will heat to an excess, leading to degradation of flavour quality and consumer satisfaction.

US 2016/198759 A1 relates to an e-fluid for use in an e-cigarette comprising caffeine at a concentration of between about 0.01M to about 0.15M; cyclodextrin at a concentration having a molar ratio with the caffeine concentration of 0.5 to 5.0; and an aqueous solution of hydrophilic solvent being between about 2M and 10M hydrophilic solvent.

US 2001/009660 A1 relates to an oral rinse, dentifrice, or oral gel composition comprising a citrus flavour, citrus flavour ingredient, or mixtures thereof; a phenolic, said phenolic selected from the group consisting of menthol, eucalyptol, methyl salicylate, thymol, triclosan, and mixtures thereof; and an orally acceptable carrier.

WO 2007/138462 A2 relates to an aqueous solution for oral administration comprising a therapeutically effective amount of risperidone or a pharmaceutically acceptable acid addition salt thereof, and one or more cyclodextrins or derivatives thereof.

US 2017/231996 A1 relates to a supersaturated aqueous solution of caffeine having a caffeine concentration of between about 1.7% (w/v) and about 3.0% (w/v), a caffeine isomer having a concentration of between about 0.05% (w/v) and about 0.10% (w/v), an organic acid, cyclodextrine (CD) and water.

EP 0 774 978 A1 relates to a stable, aqueous odour-absorbing composition, for use on inanimate surfaces. The composition comprises a solubilized, water-soluble, uncomplexed cyclodextrin, a solubilized, water-soluble, antimicrobial preservative having a water-solubility of greater than about 0.3 %, optional perfume, and an aqueous carrier.

### SUMMARY OF THE INVENTION

In one aspect there is provided an aerosolisable formulation comprising
(i) water in an amount of at least 70 wt.% based on the aerosolisable formulation;
(ii) one or more flavours;
(iii) one or more cyclodextrins; and
(iv) nicotine.

The present invention further provides a process for forming an aerosol, the process comprising aerosolising an aerosolisable formulation comprising
(i) water in an amount of at least 70 wt.% based on the aerosolisable formulation;
(ii) one or more flavours;
(iii) one or more cyclodextrins; and
(iv) nicotine.

The present invention further provides a contained aerosolisable formulation comprising
(a) a container; and
(b) an aerosolisable formulation, comprising
   (i) water in an amount of at least 70 wt.% based on the aerosolisable formulation;
   (ii) one or more flavours;
   (iii) one or more cyclodextrins; and
   (iv) nicotine.

The present invention further provides an electronic aerosol provision system comprising:
(a) an aerosoliser for aerosolising formulation for inhalation by a user of the electronic aerosol provision system;
(b) a power supply comprising a cell or battery for supplying power to the aerosoliser
(c) an aerosolisable formulation, comprising
   (i) water in an amount of at least 70 wt.% based on the aerosolisable formulation;
   (ii) one or more flavours; and
   (iii) one or more cyclodextrins.

The present invention further provides use of one or more cyclodextrins for delivering a flavour in an aerosol, wherein the aerosol is formed by aerosolising an aerosolisable formulation comprising
(i) water in an amount of at least 70 wt.% based on the aerosolisable formulation;
(ii) one or more flavours;
(iii) one or more cyclodextrins; and
(iv) nicotine.
at a temperature below 50°C.

### DETAILED DESCRIPTION

As discussed herein the present invention provides an aerosolisable formulation comprising
(i) water in an amount of at least 70 wt.% based on the aerosolisable formulation;
(ii) one or more flavours;
(iii) one or more cyclodextrins; and
(iv) nicotine.

The use of cyclodextrins to solubilise hydrophobic drugs has been documented in the pharmaceutical industry. Specifically, cyclodextrins have been used where drugs are designed for treatment of respiratory diseases and therefore intended for deep lung inhalation. Furthermore, the use of cyclodextrins to encapsulate flavours is known in consumer products, albeit not for products designed for inhalation. Therefore, there is an understanding in the art that cyclodextrins may be used for encapsulating active products and for encapsulating flavours, such as menthol, and in particular for ensuring the stability of formulated actives and flavours. However, this encapsulation is generally considered to be strong and one would not expect the flavour to be readily released on use of the product. We have found that by incorporating the flavour in a formulation containing a large amount of water, namely at least 50 wt.%, an aerosolisable formulation may be provided wherein, when an aerosol is generated, the flavour is released from encapsulation by the cyclodextrins.

These high water systems are unusual in the field of aerosol delivery devices, such as electronic cigarettes. The formulations delivered by such devices typically use greater amounts of excipients such as glycerol and/or propylene glycol. We have surprisingly found that by providing a formulation containing greater than 50 wt% water, and one or more cyclodextrins, such as 2-hydroxypropyl-β-cyclodextrin (HPbCD), an inclusion complex is provided containing both the flavour compound and, if present, active substance. This formulation can be delivered using non-heating means, such as the provision of ultrasonic energy through a vibrating mesh. Typically such high water content formulations are not suitable for aerosol delivery devices because the heat required to vaporise such significant quantities of water is too great. The avoidance of heat avoids the problems of heat degradation discussed above, and it has surprisingly been found that the flavour is still capable of being release from the cyclodextrin even though the formulation is not heated to produce a condensation aerosol.

For ease of reference, these and further aspects of the present invention are now discussed under appropriate section headings. However, the teachings under each section are not necessarily limited to each particular section.

### Water

As discussed here the aerosolisable formulation of the present invention comprises water in an amount of at least 70 wt.% based on the aerosolisable formulation.

In one aspect water is present in an amount of at least 75 wt.% based on the aerosolisable formulation. In one aspect water is present in an amount of at least 80 wt.% based on the aerosolisable formulation. In one aspect water is present in an amount of at least 85 wt.% based on the aerosolisable formulation. In one aspect water is present in an amount of at least 90 wt.% based on the aerosolisable formulation.

In one aspect water is present in an amount of from 70 to 99 wt.% based on the aerosolisable formulation. In one aspect water is present in an amount of from 75 to 99 wt.% based on the aerosolisable formulation. In one aspect water is present in an amount of from 80 to 99 wt.% based on the aerosolisable formulation. In one aspect water is present in an amount of from 85 to 99 wt.% based on the aerosolisable formulation. In one aspect water is present in an amount of from 90 to 99 wt.% based on the aerosolisable formulation.

In one aspect water is present in an amount of from 70 to 95 wt.% based on the aerosolisable formulation. In one aspect water is present in an amount of from 75 to 95 wt.% based on the aerosolisable formulation. In one aspect water is present in an amount of from 80 to 95 wt.% based on the aerosolisable formulation. In one aspect water is present in an amount of from 85 to 95 wt.% based on the aerosolisable formulation. In one aspect water is present in an amount of from 90 to 95 wt.% based on the aerosolisable formulation.

In one aspect water is present in an amount of from 70 to 90 wt.% based on the aerosolisable formulation. In one aspect water is present in an amount of from 75 to 90 wt.% based on the aerosolisable formulation. In one aspect water is present in an amount of from 80 to 90 wt.% based on the aerosolisable formulation. In one aspect water is present in an amount of from 85 to 90 wt.% based on the aerosolisable formulation.

### Flavours

As used herein, the terms "flavour" and "flavourant" refer to materials which, where local regulations permit, are added with the formulation to create a desired taste or aroma in a product for adult consumers. Thus, whilst it is acknowledged that some other functional components of the formulation may contain components that have a perceptible flavour or aroma, such components are not added for this purpose and as such are not considered to be a "flavour" or "flavourant" in the context of the present invention. Furthermore, it will be understood that "flavours" or "flavourants" may well composed of one or more individual compounds that together form an identifiable flavour. As such, reference here to "flavour" or "flavourant" includes both singular and multi-component flavours.

As discussed here the aerosolisable formulation of the present invention comprises one or more flavours.

In one aspect the aerosolisable formulation of the present invention comprises only one flavour. In one aspect the aerosolisable formulation of the present invention comprises more than one flavour. In one aspect the aerosolisable formulation of the present invention comprises two or more flavours. In one aspect the aerosolisable formulation of the present invention comprises only two flavours. In one aspect the aerosolisable formulation of the present invention comprises three or more flavours. In one aspect the aerosolisable formulation of the present invention comprises only three flavours. In one aspect the aerosolisable formulation of the present invention comprises four or more flavours. In one aspect the aerosolisable formulation of the present invention comprises only four flavours. In one aspect the aerosolisable formulation of the present invention comprises five or more flavours. In one aspect the aerosolisable formulation of the present invention comprises only five flavours.

In one aspect the one or more flavours are selected from the group consisting of extracts (e.g. liquorice, hydrangea, Japanese white bark magnolia leaf, chamomile, fenugreek, clove, menthol, Japanese mint, aniseed, cinnamon, herb, wintergreen, cherry, berry, peach, apple, Drambuie, bourbon, scotch, whiskey, spearmint, peppermint, lavender, cardamom, celery, cascarilla, nutmeg, sandalwood, bergamot, geranium, honey essence, rose oil, vanilla, lemon oil, orange oil, cassia, caraway, cognac, jasmine, ylang-ylang, sage, fennel, piment, ginger, anise, coriander, coffee, or a mint oil from any species of the genus Mentha), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, oil, liquid, or powder.

In one aspect the one or more flavours are selected from the group consisting of (4-(para-)methoxyphenyl)-2-butanone, vanillin, γ-undecalactone, menthone, 5-propenyl guaethol, menthol, para-mentha-8-thiol-3-one and mixtures thereof.

In one aspect the flavour is at least menthol. In one aspect the flavour is only menthol. In one aspect menthol comprises at least 30wt.% of the flavours present in the aerosolisable formulation. In one aspect menthol comprises at least 40wt.% of the flavours present in the aerosolisable formulation. In one aspect menthol comprises at least 50wt.% of the flavours present in the aerosolisable formulation. In one aspect menthol comprises at least 60wt.% of the flavours present in the aerosolisable formulation. In one aspect menthol comprises at least 70wt.% of the flavours present in the aerosolisable formulation.

In one aspect, at least one of the one or more flavours is hydrophobic. In one aspect each of the one or more flavours is hydrophobic. In a further aspect, the present invention provides an aerosolisable formulation comprising
(i) water in an amount of at least 70 wt.% based on the aerosolisable formulation;
(ii) one or more hydrophobic flavours;
(iii) one or more cyclodextrins; and
(iv) nicotine.

The one or more flavours may be present in any amount to deliver the desired flavour to the aerosolisable formulation. In one aspect the one or more flavours are present in a total amount of no greater than 10 wt.% based on the aerosolisable formulation. In one aspect the one or more flavours are present in a total amount of no greater than 9 wt.% based on the aerosolisable formulation. In one aspect the one or more flavours are present in a total amount of no greater than 8 wt.% based on the aerosolisable formulation. In one aspect the one or more flavours are present in a total amount of no greater than 7 wt.% based on the aerosolisable formulation. In one aspect the one or more flavours are present in a total amount of no greater than 6 wt.% based on the aerosolisable formulation. In one aspect the one or more flavours are present in a total amount of no greater than 5 wt.% based on the aerosolisable formulation. In one aspect the one or more flavours are present in a total amount of no greater than 4 wt.% based on the aerosolisable formulation. In one aspect the one or more flavours are present in a total amount of no greater than 3 wt.% based on the aerosolisable formulation. In one aspect the one or more flavours are present in a total amount of no greater than 2 wt.% based on the aerosolisable formulation. In one aspect the one or more flavours are present in a total amount of no greater than 1.8wt.% based on the aerosolisable formulation. In one aspect the one or more flavours are present in a total amount of no greater than 1.6 wt.% based on the aerosolisable formulation. In one aspect the one or more flavours are present in a total amount of no greater than 1.5 wt.% based on the aerosolisable formulation. In one aspect the one or more flavours are present in a total amount of no greater than 1.4 wt.% based on the aerosolisable formulation. In one aspect the one or more flavours are present in a total amount of no greater than 1.3 wt.% based on the aerosolisable formulation. In one aspect the one or more flavours are present in a total amount of no greater than 1.2 wt.% based on the aerosolisable formulation. In one aspect the one or more flavours are present in a total amount of no greater than 1.1. wt.% based on the aerosolisable formulation. In one aspect the one or more flavours are present in a total amount of no greater than 1 wt.% based on the aerosolisable formulation.

In one aspect the one or more flavours are present in a total amount of at least 0.01 wt.% based on the aerosolisable formulation. In one aspect the one or more flavours are present in a total amount of at least 0.02 wt.% based on the aerosolisable formulation. In one aspect the one or more flavours are present in a total amount of at least 0.03 wt.% based on the aerosolisable formulation. In one aspect the one or more flavours are present in a total amount of at least 0.04 wt.% based on the aerosolisable formulation. In one aspect the one or more flavours are present in a total amount of at least 0.05 wt.% based on the aerosolisable formulation. In one aspect the one or more flavours are present in a total amount of at least 0.06 wt.% based on the aerosolisable formulation. In one aspect the one or more flavours are present in a total amount of at least 0.07 wt.% based on the aerosolisable formulation. In one aspect the one or more flavours are present in a total amount of at least 0.08 wt.% based on the aerosolisable formulation. In one aspect the one or more flavours are present in a total amount of at least 0.09 wt.% based on the aerosolisable formulation. In one aspect the one or more flavours are present in a total amount of at least 0.1 wt.% based on the aerosolisable formulation. In one aspect the one or more flavours are present in a total amount of at least 0.2 wt.% based on the aerosolisable formulation. In one aspect the one or more flavours are present in a total amount of at least 0.3 wt.% based on the aerosolisable formulation. In one aspect the one or more flavours are present in a total amount of at least 0.4 wt.% based on the aerosolisable formulation. In one aspect the one or more flavours are present in a total amount of at least 0.5 wt.% based on the aerosolisable formulation. In one aspect the one or more flavours are present in a total amount of at least 0.6 wt.% based on the aerosolisable formulation. In one aspect the one or more flavours are present in a total amount of at least 0.7 wt.% based on the aerosolisable formulation. In one aspect the one or more flavours are present in a total amount of at least 0.8 wt.% based on the aerosolisable formulation. In one aspect the one or more flavours are present in a total amount of at least 0.9 wt.% based on the aerosolisable formulation.

In one aspect the one or more flavours are present in a total amount of from 0.01 to 10 wt.% based on the aerosolisable formulation. In one aspect the one or more flavours are present in a total amount of from 0.01 to 9 wt.% based on the aerosolisable formulation. In one aspect the one or more flavours are present in a total amount of from 0.01 to 8 wt.% based on the aerosolisable formulation. In one aspect the one or more flavours are present in a total amount of from 0.01 to 7 wt.% based on the aerosolisable formulation. In one aspect the one or more flavours are present in a total amount of from 0.01 to 6 wt.% based on the aerosolisable formulation. In one aspect the one or more flavours are present in a total amount of from 0.01 to 5 wt.% based on the aerosolisable formulation. In one aspect the one or more flavours are present in a total amount of from 0.01 to 4 wt.% based on the aerosolisable formulation. In one aspect the one or more flavours are present in a total amount of from 0.01 to 3 wt.% based on the aerosolisable formulation. In one aspect the one or more flavours are present in a total amount of from 0.01 to 2 wt.% based on the aerosolisable formulation. In one aspect the one or more flavours are present in a total amount of from 0.01 to 1.8wt.% based on the aerosolisable formulation. In one aspect the one or more flavours are present in a total amount of from 0.01 to 1.6 wt.% based on the aerosolisable formulation. In one aspect the one or more flavours are present in a total amount of from 0.01 to 1.5 wt.% based on the aerosolisable formulation. In one aspect the one or more flavours are present in a total amount of from 0.01 to 1.4 wt.% based on the aerosolisable formulation. In one aspect the one or more flavours are present in a total amount of from 0.01 to 1.3 wt.% based on the aerosolisable formulation. In one aspect the one or more flavours are present in a total amount of from 0.01 to 1.2 wt.% based on the aerosolisable formulation. In one aspect the one or more flavours are present in a total amount of from 0.01 to 1.1. wt.% based on the aerosolisable formulation. In one aspect the one or more flavours are present in a total amount of from 0.01 to 1 wt.% based on the aerosolisable formulation.

We have found that the addition of the one or more flavours in a molar excess with respect to the one or more cyclodextrins may result in the one or more flavours precipitating from the formulation. Therefore in one aspect, the one or more cyclodextrins are present in a molar excess with respect to the one or more flavours. In one aspect, the molar ratio of cyclodextrins to flavours is at least 1.2:1. In one aspect, the molar ratio of cyclodextrins to flavours is at least 1.4:1. In one aspect, the molar ratio of cyclodextrins to flavours is at least 1.6:1. In one aspect, the molar ratio of cyclodextrins to flavours is at least 1.8:1. In one aspect, the molar ratio of cyclodextrins to flavours is at least 2:1. In one aspect, the molar ratio of cyclodextrins to flavours is from 5:1 to 1.5:1. In one aspect, the molar ratio of cyclodextrins to flavours is from 4:1 to 1.5:1. In one aspect, the molar ratio of cyclodextrins to flavours is from 2:1 to 1.5:1. In one aspect, the molar ratio of cyclodextrins to flavours is from 2:1 to 1.5:1. In one aspect, the molar ratio of cyclodextrins to flavours is from 2:1 to 1.2:1.

### Cyclodextrins.

As discussed herein, the aerosolisable formulation of the present invention comprises one or more cyclodextrins. The one or more cyclodextrins may be selected from the group consisting of unsubstituted cyclodextrins, substituted cyclodextrins and mixtures thereof. In one aspect at least one cyclodextrin is an unsubstituted cyclodextrin. In one aspect the one or more cyclodextrins are selected from the group consisting of unsubstituted cyclodextrins. In one aspect at least one cyclodextrin is a substituted cyclodextrin. In one aspect the one or more cyclodextrins are selected from the group consisting of substituted cyclodextrins.

In one aspect the one or more cyclodextrins are selected from the group consisting of unsubstituted (α)-cyclodextrin, substituted (α)-cyclodextrin, unsubstituted (β)-cyclodextrin, substituted (β)-cyclodextrin, unsubstituted (γ)-cyclodextrin, substituted (γ)-cyclodextrin, and mixtures thereof. In one aspect the one or more cyclodextrins are selected from the group consisting of unsubstituted (β)-cyclodextrin, substituted (β)-cyclodextrin, and mixtures thereof.

As discussed herein, We have found that each of the α, β and γ variants of cyclodextrin may be used and the most suitable one may be selected depending on the 'guest' components, such as the present flavours, to be complexed.

In one aspect the one or more cyclodextrins are selected from the group consisting of unsubstituted (α)-cyclodextrin, unsubstituted (β)-cyclodextrin, unsubstituted (γ)-cyclodextrin, and mixtures thereof. In one aspect the one or more cyclodextrins is selected from unsubstituted (β)-cyclodextrin.

In one aspect the one or more cyclodextrins are selected from the group consisting of substituted (α)-cyclodextrin, substituted (β)-cyclodextrin, substituted (γ)-cyclodextrin, and mixtures thereof.. In one aspect the one or more cyclodextrins is selected from substituted (β)-cyclodextrins. Chemical substitutions at the 2-, 3-, and 6-hydroxyl sites are preferred, with substitution at the 2-position being more preferred.

In one aspect the one or more cyclodextrins are selected from the group consisting of 2-hydroxy-propyl-α-cyclodextrin, 2-hydroxy-propyl-β-cyclodextrin, 2-hydroxy-propyl-γ-cyclodextrin and mixtures thereof. In one aspect the one or more cyclodextrins is at least 2-hydroxy-propyl-α-cyclodextrin. In one aspect the one or more cyclodextrins is at least 2-hydroxy-propyl-β-cyclodextrin. In one aspect the one or more cyclodextrins is at least 2-hydroxy-propyl-γ-cyclodextrin.

We have found that 2-hydroxy-propyl derivatives of cyclodextrins, such as 2-hydroxy-propyl-β-cyclodextrin are particularly preferred since these derivatives have increased solubility in water when compared to base cyclodextrins such as β-cyclodextrin.

The one or more cyclodextrins may be present in any suitable amount in the aerosolisable formulation. In one aspect the one or more cyclodextrins are present in a total amount of no greater than 20 wt.% based on the aerosolisable formulation. In one aspect the one or more cyclodextrins are present in a total amount of no greater than 18 wt.% based on the aerosolisable formulation. In one aspect the one or more cyclodextrins are present in a total amount of no greater than 16 wt.% based on the aerosolisable formulation. In one aspect the one or more cyclodextrins are present in a total amount of no greater than 14 wt.% based on the aerosolisable formulation. In one aspect the one or more cyclodextrins are present in a total amount of no greater than 12 wt.% based on the aerosolisable formulation. In one aspect the one or more cyclodextrins are present in a total amount of no greater than 10 wt.% based on the aerosolisable formulation. In one aspect the one or more cyclodextrins are present in a total amount of no greater than 9 wt.% based on the aerosolisable formulation. In one aspect the one or more cyclodextrins are present in a total amount of no greater than 8 wt.% based on the aerosolisable formulation. In one aspect the one or more cyclodextrins are present in a total amount of no greater than 7 wt.% based on the aerosolisable formulation. In one aspect the one or more cyclodextrins are present in a total amount of no greater than 6 wt.% based on the aerosolisable formulation. In one aspect the one or more cyclodextrins are present in a total amount of no greater than 5 wt.% based on the aerosolisable formulation.

In one aspect the one or more cyclodextrins are present in a total amount of at least 1 wt.% based on the aerosolisable formulation. In one aspect the one or more cyclodextrins are present in a total amount of at least 2 wt.% based on the aerosolisable formulation. In one aspect the one or more cyclodextrins are present in a total amount of at least 3 wt.% based on the aerosolisable formulation. In one aspect the one or more cyclodextrins are present in a total amount of at least 4 wt.% based on the aerosolisable formulation. In one aspect the one or more cyclodextrins are present in a total amount of at least 5 wt.% based on the aerosolisable formulation. In one aspect the one or more cyclodextrins are present in a total amount of at least 6 wt.% based on the aerosolisable formulation. In one aspect the one or more cyclodextrins are present in a total amount of at least 7 wt.% based on the aerosolisable formulation. In one aspect the one or more cyclodextrins are present in a total amount of at least 8 wt.% based on the aerosolisable formulation.

In one aspect the one or more cyclodextrins are present in a total amount of from 1 to 20 wt.% based on the aerosolisable formulation. In one aspect the one or more cyclodextrins are present in a total amount of from 1 to 18 wt.% based on the aerosolisable formulation. In one aspect the one or more cyclodextrins are present in a total amount of from 1 to 16 wt.% based on the aerosolisable formulation. In one aspect the one or more cyclodextrins are present in a total amount of from 1 to 14 wt.% based on the aerosolisable formulation. In one aspect the one or more cyclodextrins are present in a total amount of from 1 to 12 wt.% based on the aerosolisable formulation. In one aspect the one or more cyclodextrins are present in a total amount of from 1 to 10 wt.% based on the aerosolisable formulation. In one aspect the one or more cyclodextrins are present in a total amount of from 1 to 9 wt.% based on the aerosolisable formulation. In one aspect the one or more cyclodextrins are present in a total amount of from 1 to 8 wt.% based on the aerosolisable formulation. In one aspect the one or more cyclodextrins are present in a total amount of from 1 to 7 wt.% based on the aerosolisable formulation. In one aspect the one or more cyclodextrins are present in a total amount of from 1 to 6 wt.% based on the aerosolisable formulation. In one aspect the one or more cyclodextrins are present in a total amount of from 1 to 5 wt.% based on the aerosolisable formulation.

In one aspect the one or more cyclodextrins are present in a total amount of from 2 to 20 wt.% based on the aerosolisable formulation. In one aspect the one or more cyclodextrins are present in a total amount of from 2 to 18 wt.% based on the aerosolisable formulation. In one aspect the one or more cyclodextrins are present in a total amount of from 2 to 16 wt.% based on the aerosolisable formulation. In one aspect the one or more cyclodextrins are present in a total amount of from 2 to 14 wt.% based on the aerosolisable formulation. In one aspect the one or more cyclodextrins are present in a total amount of from 2 to 12 wt.% based on the aerosolisable formulation. In one aspect the one or more cyclodextrins are present in a total amount of from 2 to 10 wt.% based on the aerosolisable formulation. In one aspect the one or more cyclodextrins are present in a total amount of from 2 to 9 wt.% based on the aerosolisable formulation. In one aspect the one or more cyclodextrins are present in a total amount of from 2 to 8 wt.% based on the aerosolisable formulation. In one aspect the one or more cyclodextrins are present in a total amount of from 2 to 7 wt.% based on the aerosolisable formulation. In one aspect the one or more cyclodextrins are present in a total amount of from 2 to 6 wt.% based on the aerosolisable formulation. In one aspect the one or more cyclodextrins are present in a total amount of from 2 to 5 wt.% based on the aerosolisable formulation.

As discussed herein, when one or more cyclodextrins, such as 2-hydroxy-propyl-β-cyclodextrin, are utilised the water content of the present formulation can be increased to high levels such as approximately 90%. When sufficient energy is imparted to the present formulation, the flavour (and any other active ingredients, if present) is readily freed from the host cyclodextrin and into the resulting aerosol. Ready availability of flavour (and active if present) also results in significant reduction of their respective inclusion levels to achieve enhanced delivery.

### Aerosolisable Formulation

The aerosolisable formulation of the present invention may contain one or more further components. These components may be selected depending on the nature of the formulation. As noted above, the aerosolisable formulation of the invention comprises nicotine. In one aspect, the aerosolisable formulation comprises a further active agent. By "active agent" it is meant an agent which has a biological effect on a subject when the aerosol is inhaled. The one or more active agents may be selected from botanicals, and mixtures thereof. The one or more active agents may be of synthetic or natural origin. The active could be an extract from a botanical, such as from a plant in the tobacco family.

In one embodiment, the active agent is at least nicotine.

Nicotine may be provided at any suitable amount depending on the desired dosage when inhaled by the user. In one aspect nicotine is present in an amount of no greater than 6 wt% based on the total weight of the aerosolisable formulation. In one aspect nicotine is present in an amount of from 0.4 to 6 wt% based on the total weight of the aerosolisable formulation. In one aspect nicotine is present in an amount of from 0.8 to 6 wt% based on the total weight of the aerosolisable formulation. In one aspect nicotine is present in an amount of from 1 to 6 wt% based on the total weight of the aerosolisable formulation. In one aspect nicotine is present in an amount of from 1.8 to 6 wt% based on the total weight of the aerosolisable formulation. In one aspect nicotine is present in an amount of from 0.4 to 5 wt% based on the total weight of the aerosolisable formulation. In one aspect nicotine is present in an amount of from 0.8 to 5 wt% based on the total weight of the aerosolisable formulation. In one aspect nicotine is present in an amount of from 1 to 5 wt% based on the total weight of the aerosolisable formulation. In one aspect nicotine is present in an amount of from 1.8 to 5 wt% based on the total weight of the aerosolisable formulation. In one aspect nicotine is present in an amount of no greater than 4 wt% based on the total weight of the aerosolisable formulation. In one aspect nicotine is present in an amount of from 0.4 to 4 wt% based on the total weight of the aerosolisable formulation. In one aspect nicotine is present in an amount of from 0.8 to 4 wt% based on the total weight of the aerosolisable formulation. In one aspect nicotine is present in an amount of from 1 to 4 wt% based on the total weight of the aerosolisable formulation. In one aspect nicotine is present in an amount of from 1.8 to 4 wt% based on the total weight of the aerosolisable formulation. In one aspect nicotine is present in an amount of no greater than 3 wt% based on the total weight of the aerosolisable formulation. In one aspect nicotine is present in an amount of from 0.4 to 3 wt% based on the total weight of the aerosolisable formulation. In one aspect nicotine is present in an amount of from 0.8 to 3 wt% based on the total weight of the aerosolisable formulation. In one aspect nicotine is present in an amount of from 1 to 3 wt% based on the total weight of the aerosolisable formulation. In one aspect nicotine is present in an amount of from 1.8 to 3 wt% based on the total weight of the aerosolisable formulation. In one aspect nicotine is present in an amount of no greater than 1.9 wt% based on the total weight of the aerosolisable formulation. In one aspect nicotine is present in an amount of no greater than 1.8 wt% based on the total weight of the aerosolisable formulation. In one aspect nicotine is present in an amount of from 0.4 to 1.9 wt% based on the total weight of the aerosolisable formulation. In one aspect nicotine is present in an amount of from 0.4 to 1.8 wt% based on the total weight of the aerosolisable formulation. In one aspect nicotine is present in an amount of from 0.5 to 1.9 wt% based on the total weight of the aerosolisable formulation. In one aspect nicotine is present in an amount of from 0.5 to 1.8 wt% based on the total weight of the aerosolisable formulation. In one aspect nicotine is present in an amount of from 0.8 to 1.9 wt% based on the total weight of the aerosolisable formulation. In one aspect nicotine is present in an amount of from 0.8 to 1.8 wt% based on the total weight of the aerosolisable formulation. In one aspect nicotine is present in an amount of from 1 to 1.9 wt% based on the total weight of the aerosolisable formulation. In one aspect nicotine is present in an amount of from 1 to 1.8 wt% based on the total weight of the aerosolisable formulation. In one aspect nicotine is present in an amount of less than 1.9 wt% based on the total weight of the aerosolisable formulation. In one aspect nicotine is present in an amount of less than 1.8 wt% based on the total weight of the aerosolisable formulation. In one aspect nicotine is present in an amount of from 0.4 to less than 1.9 wt% based on the total weight of the aerosolisable formulation. In one aspect nicotine is present in an amount of from 0.4 to less than 1.8 wt% based on the total weight of the aerosolisable formulation. In one aspect nicotine is present in an amount of from 0.5 to less than 1.9 wt% based on the total weight of the aerosolisable formulation. In one aspect nicotine is present in an amount of from 0.5 to less than 1.8 wt% based on the total weight of the aerosolisable formulation. In one aspect nicotine is present in an amount of from 0.8 to less than 1.9 wt% based on the total weight of the aerosolisable formulation. In one aspect nicotine is present in an amount of from 0.8 to less than 1.8 wt% based on the total weight of the aerosolisable formulation. In one aspect nicotine is present in an amount of from 1 to less than 1.9 wt% based on the total weight of the aerosolisable formulation. In one aspect nicotine is present in an amount of from 1 to less than 1.8 wt% based on the total weight of the aerosolisable formulation.

In one aspect nicotine is present in an amount of no greater than 6 wt% based on the total weight of the aerosolisable formulation. In one aspect nicotine is present in an amount of from 0.01 to 6 wt% based on the total weight of the aerosolisable formulation. In one aspect nicotine is present in an amount of from 0.02 to 6 wt% based on the total weight of the aerosolisable formulation. In one aspect nicotine is present in an amount of from 0.05 to 6 wt% based on the total weight of the aerosolisable formulation. In one aspect nicotine is present in an amount of from 0.08 to 6 wt% based on the total weight of the aerosolisable formulation. In one aspect nicotine is present in an amount of from 0.01 to 5 wt% based on the total weight of the aerosolisable formulation. In one aspect nicotine is present in an amount of from 0.02 to 5 wt% based on the total weight of the aerosolisable formulation. In one aspect nicotine is present in an amount of from 0.05 to 5 wt% based on the total weight of the aerosolisable formulation. In one aspect nicotine is present in an amount of from 0.08 to 5 wt% based on the total weight of the aerosolisable formulation. In one aspect nicotine is present in an amount of no greater than 4 wt% based on the total weight of the aerosolisable formulation. In one aspect nicotine is present in an amount of from 0.01 to 4 wt% based on the total weight of the aerosolisable formulation. In one aspect nicotine is present in an amount of from 0.02 to 4 wt% based on the total weight of the aerosolisable formulation. In one aspect nicotine is present in an amount of from 0.05 to 4 wt% based on the total weight of the aerosolisable formulation. In one aspect nicotine is present in an amount of from 0.08 to 4 wt% based on the total weight of the aerosolisable formulation. In one aspect nicotine is present in an amount of no greater than 3 wt% based on the total weight of the aerosolisable formulation. In one aspect nicotine is present in an amount of from 0.01 to 3 wt% based on the total weight of the aerosolisable formulation. In one aspect nicotine is present in an amount of from 0.02 to 3 wt% based on the total weight of the aerosolisable formulation. In one aspect nicotine is present in an amount of from 0.05 to 3 wt% based on the total weight of the aerosolisable formulation. In one aspect nicotine is present in an amount of from 0.08 to 3 wt% based on the total weight of the aerosolisable formulation. In one aspect nicotine is present in an amount of no greater than 2 wt% based on the total weight of the aerosolisable formulation. In one aspect nicotine is present in an amount of from 0.01 to 2 wt% based on the total weight of the aerosolisable formulation. In one aspect nicotine is present in an amount of from 0.02 to 2 wt% based on the total weight of the aerosolisable formulation. In one aspect nicotine is present in an amount of from 0.05 to 2 wt% based on the total weight of the aerosolisable formulation. In one aspect nicotine is present in an amount of from 0.08 to 2 wt% based on the total weight of the aerosolisable formulation. In one aspect nicotine is present in an amount of no greater than 1 wt% based on the total weight of the aerosolisable formulation. In one aspect nicotine is present in an amount of from 0.01 to 1 wt% based on the total weight of the aerosolisable formulation. In one aspect nicotine is present in an amount of from 0.02 to 1 wt% based on the total weight of the aerosolisable formulation. In one aspect nicotine is present in an amount of from 0.05 to 1 wt% based on the total weight of the aerosolisable formulation. In one aspect nicotine is present in an amount of from 0.08 to 1 wt% based on the total weight of the aerosolisable formulation. In one aspect nicotine is present in an amount of from 0.1 to 1 wt% based on the total weight of the aerosolisable formulation. In one aspect nicotine is present in an amount of no greater than 0.5 wt% based on the total weight of the aerosolisable formulation. In one aspect nicotine is present in an amount of from 0.01 to 0.5 wt% based on the total weight of the aerosolisable formulation. In one aspect nicotine is present in an amount of from 0.02 to 0.5 wt% based on the total weight of the aerosolisable formulation. In one aspect nicotine is present in an amount of from 0.05 to 0.5 wt% based on the total weight of the aerosolisable formulation. In one aspect nicotine is present in an amount of from 0.08 to 0.5 wt% based on the total weight of the aerosolisable formulation. In one aspect nicotine is present in an amount of no greater than 0.2 wt% based on the total weight of the aerosolisable formulation. In one aspect nicotine is present in an amount of from 0.01 to 0.2 wt% based on the total weight of the aerosolisable formulation. In one aspect nicotine is present in an amount of from 0.02 to 0.2 wt% based on the total weight of the aerosolisable formulation. In one aspect nicotine is present in an amount of from 0.05 to 0.2 wt% based on the total weight of the aerosolisable formulation. In one aspect nicotine is present in an amount of from 0.08 to 0.2 wt% based on the total weight of the aerosolisable formulation.

As discussed herein, we have found that each of the α, β and γ variants of cyclodextrin may be used and the most suitable one may be selected depending on the 'guest' components, such as the present flavours, to be complexed. We have found that the β variant complexes well with nicotine and other structurally similar active substances, so a small inclusion level is likely. 2-hydroxy-propyl-β-cyclodextrin complexes well with cyclic molecules which includes nicotine, but also key flavour components such as menthol and vanillin.

We have found that the addition of a combination of the one or more actives and the one or more flavours in a combined molar excess with respect to the one or more cyclodextrins may result in the actives and flavours precipitating from the formulation. Therefore in one aspect, the one or more cyclodextrins are present in a molar excess with respect to total combined amount of the one or more flavours and the one or more actives. In one aspect, the one or more cyclodextrins are present in a molar excess with respect to total combined amount of the one or more flavours and nicotine. In one aspect, the molar ratio of cyclodextrins to flavours and nicotine combined is at least 1.2:1. In one aspect, the molar ratio of cyclodextrins to flavours and nicotine combined is at least 1.4:1. In one aspect, the molar ratio of cyclodextrins to flavours and nicotine combined is at least 1.6:1. In one aspect, the molar ratio of cyclodextrins to flavours and nicotine combined is at least 1.8:1. In one aspect, the molar ratio of cyclodextrins to flavours and nicotine combined is at least 2:1. In one aspect, the molar ratio of cyclodextrins to flavours and nicotine combined is from 5:1 to 1.5:1. In one aspect, the molar ratio of cyclodextrins to flavours and nicotine combined is from 4:1 to 1.5:1. In one aspect, the molar ratio of cyclodextrins to flavours and nicotine combined is from 2:1 to 1.5:1. In one aspect, the molar ratio of cyclodextrins to flavours and nicotine combined is from 2:1 to 1.5:1. In one aspect, the molar ratio of cyclodextrins to flavours and nicotine combined is from 2:1 to 1.2:1.

Due to the high water inclusion, preservative materials may be present to inhibit microbial growth.

### Process

As discussed herein, the present invention provides a process for forming an aerosol, the process comprising aerosolising an aerosolisable formulation comprising
(i) water in an amount of at least 70 wt.% based on the aerosolisable formulation;
(ii) one or more flavours;
(iii) one or more cyclodextrins; and
(iv) nicotine.

In one aspect, the aerosol is formed without heating the aerosolisable formulation to a temperature above 100°C. In one aspect, the aerosol is formed without heating the aerosolisable formulation to a temperature above 90°C. In one aspect, the aerosol is formed without heating the aerosolisable formulation to a temperature above 80°C.

In one aspect, the aerosol is formed by a process performed at a temperature below 60°C.ln one aspect, the aerosol is formed by a process performed at a temperature below 50°C. In one aspect, the aerosol is formed by a process performed at a temperature below 40°C.

In one aspect, the aerosol is formed by applying ultrasonic energy to the aerosolisable formulation. In particular, in one embodiment the formulation is passed through the interstices of a vibrating mesh in order to form an aerosol. Suitable devices which utilise vibrating mesh technology include the eFlow rapid nebuliser system (www.pari.com).

Also disclosed herein but not part of the present invention is a process for preparing an aerosolisable formulation comprising
(i) water in an amount of at least 50 wt.% based on the aerosolisable formulation ;
(ii) one or more flavours;
(iii) one or more cyclodextrins; and
(iv) one or more active agents,
the process comprising the steps of
(a) contacting water, the one or more cyclodextrins and at least one of the one or more active agents to form an initial cyclodextrin composition;
(b) subsequently contacting the initial cyclodextrin composition with the one or more flavours.

We have found that although complexation methods for flavours and cyclodextrins are known, the above process of complexation *in situ* is favoured. It is believed that this is due to the large difference in melting points between flavours, such as menthol (42 - 45°C), and cyclodextrins, such as HPbCD (~200°C). This is particularly evident with kneading, since a sticky paste is formed and is very difficult to work with.

In the process, preferably step (a) and/or step (b) is performed at a temperature of at least 30°C, such as at least 40°C. In one aspect the one or more cyclodextrins each have a melting point greater than each of the one or more flavours.

The active agents are added after formation of the initial cyclodextrin composition. This is due to the generally higher binding energy (vs. active agents such as nicotine) with the cyclodextrin host. With the larger disparity in binding energies, the less chance of a competing complexation mechanism with active agents. In one embodiment, the active agent is at least nicotine. In one embodiment the active agent is nicotine.

### Further Aspects

The aerosolisable formulation may be contained or delivered by any means. In one aspect the present invention provides a contained aerosolisable formulation comprising
(a) a container; and
(b) an aerosolisable formulation, comprising
   (i) water in an amount of at least 70 wt.% based on the aerosolisable formulation;
   (ii) one or more flavours;
   (iii) one or more cyclodextrins; and
   (iv) nicotine.

The container may be any suitable container, for example to allow for the storage or delivery of the solution. In one aspect the container is configured for engagement with an electronic aerosol provision system. The container may be a bottle. The container may be configured to become fluidly in communication with an electronic aerosol provision system so that solution may be delivered to the electronic aerosol provision system. As described above, the present disclosure relates to container which may be used in an electronic aerosol provision system, such as an e-cigarette. Throughout the following description the term "e-cigarette" is used; however, this term may be used interchangeably with electronic aerosol provision system.

As discussed herein, the container of the present invention is typically provided for the delivery of aerosolisable formulation to or within an e-cigarette. The aerosolisable formulation may be held within an e-cigarette or may be sold as a separate container for subsequent use with or in an e-cigarette. As understood by one skilled in the art, e-cigarettes may contain a unit known as a detachable cartomiser which typically comprises a reservoir of aerosolisable formulation, a wick material and a device for aerosolising the aerosolisable formulation. In some e-cigarettes, the cartomiser is part of a single-piece device and is not detachable. In one aspect the container is a cartomiser or is part of a cartomiser. In one aspect the container is not a cartomiser or part of a cartomiser and is a container, such as a tank, which may be used to deliver aerosolisable formulation to or within an e-cigarette.

In one aspect the container is part of an e-cigarette. Therefore in a further aspect the present invention provides an electronic aerosol provision system comprising:
(a) an aerosoliser for aerosolising formulation for inhalation by a user of the electronic aerosol provision system;
(b) a power supply comprising a cell or battery for supplying power to the aerosoliser
(c) an aerosolisable formulation, comprising
   (i) water in an amount of at least 70 wt.% based on the aerosolisable formulation;
   (ii) one or more flavours; and
   (iii) one or more cyclodextrins.

Also disclosed herein but not part of the present invention is a process for at least one of increasing solubility of a flavour and/or reducing loss of flavour over time of a flavoured aerosolisable formulation
the process comprising the steps of
(a) providing an aerosolisable material comprising water in an amount of at least 50 wt.% based on the aerosolisable material;
(b) incorporating into the aerosolisable material one or more flavours and one or more cyclodextrins.

The process may comprise additional steps either before the steps listed, after the steps listed or between one or more of the steps listed.

In addition to the aerosolisable formulation of the present invention and to systems such as containers and electronic aerosol provision systems containing the same, the present invention provides use of one or more cyclodextrins for delivering a flavour in an aerosol, wherein the aerosol is formed by aerosolising an aerosolisable formulation comprising
(i) water in an amount of at least 70 wt.% based on the aerosolisable formulation;
(ii) one or more flavours;
(iii) one or more cyclodextrins; and
(iv) water.
at a temperature below 50°C.

### BRIEF DESCRIPTION OF THE DRAWINGS

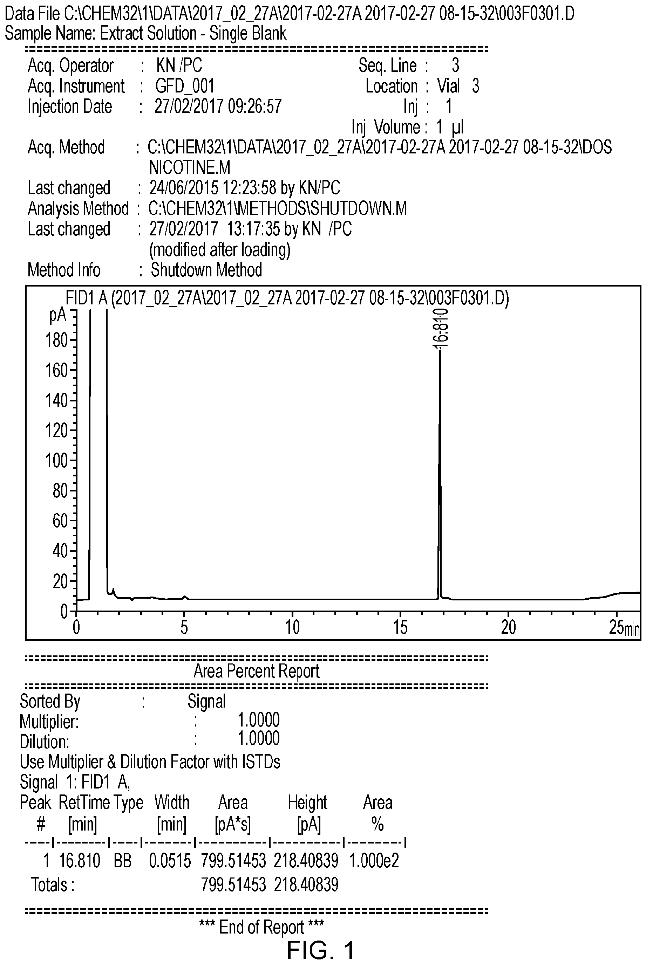

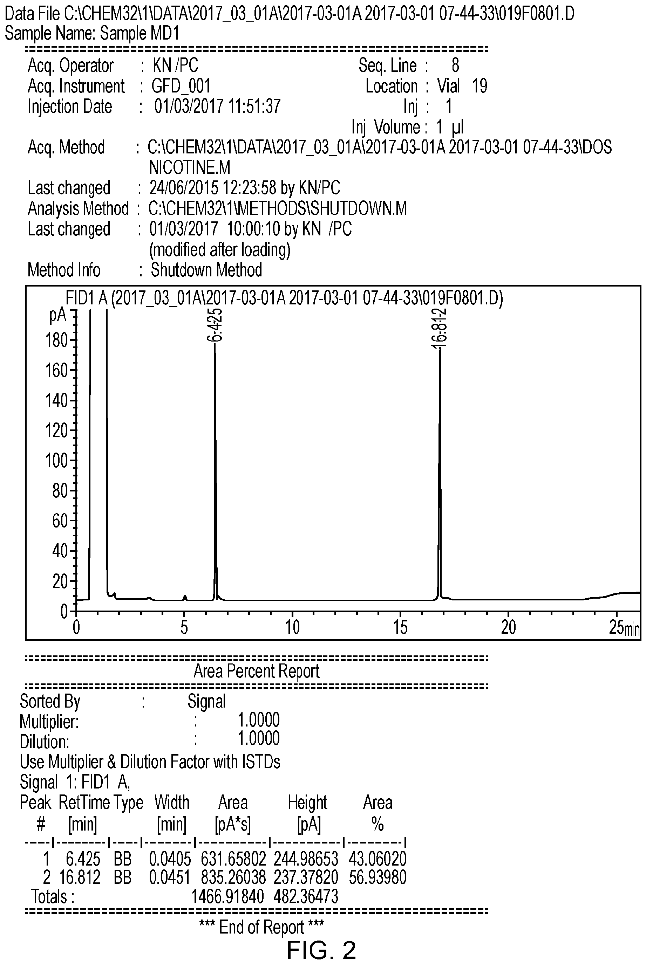

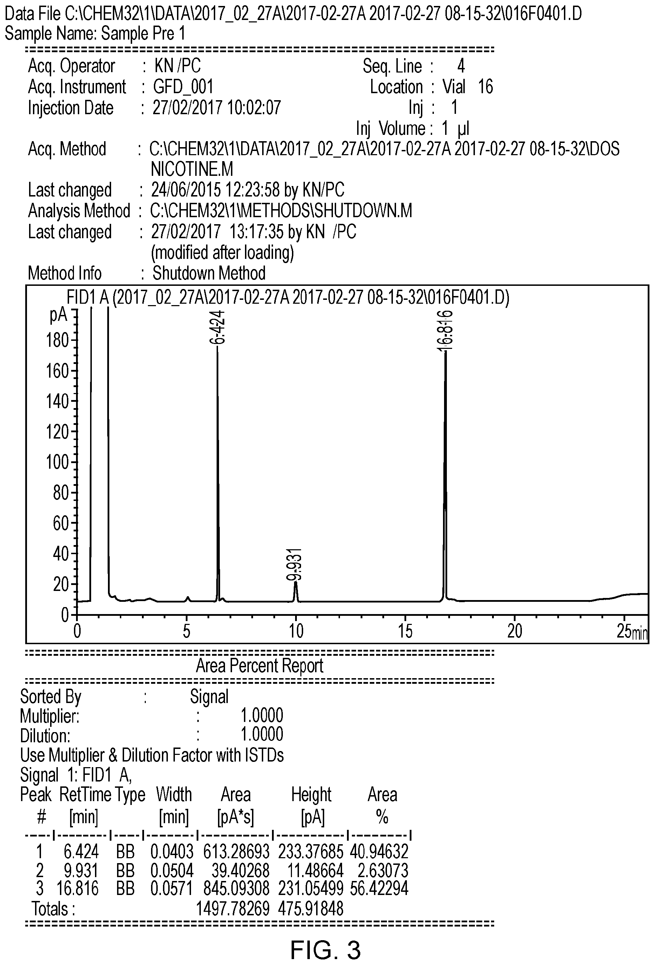

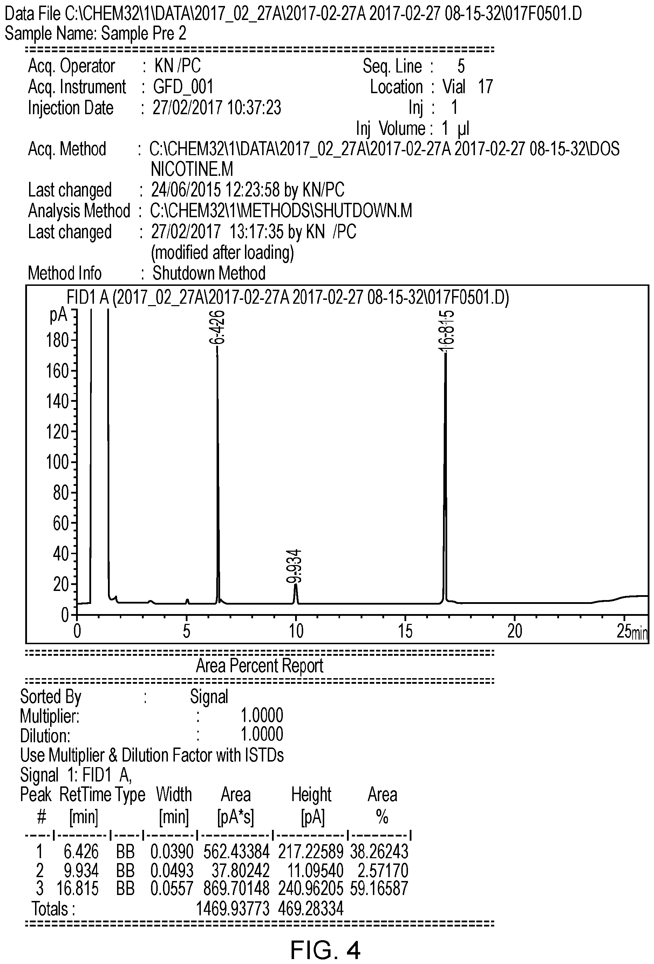

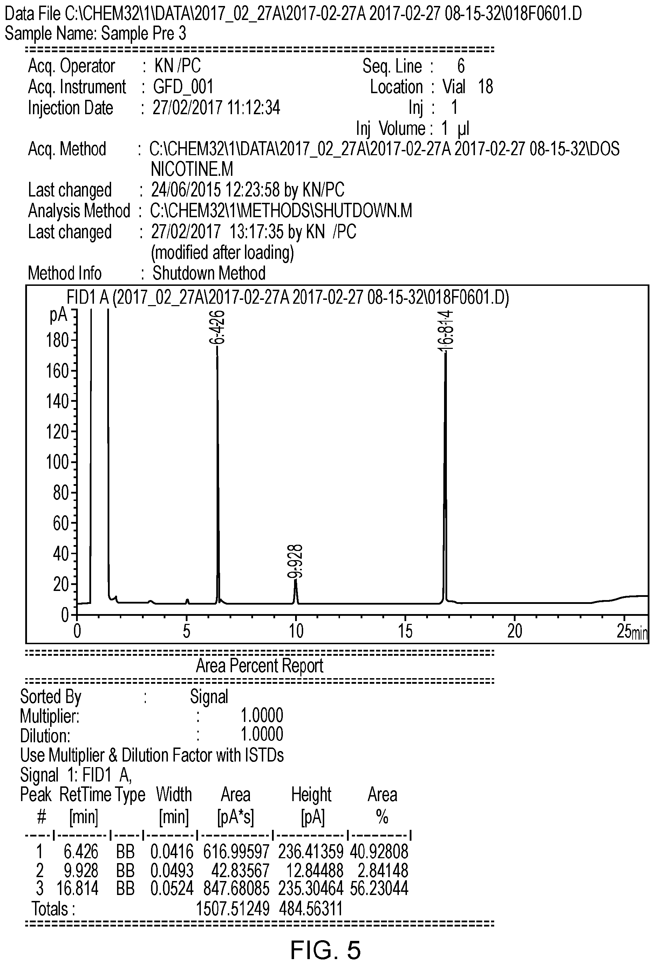

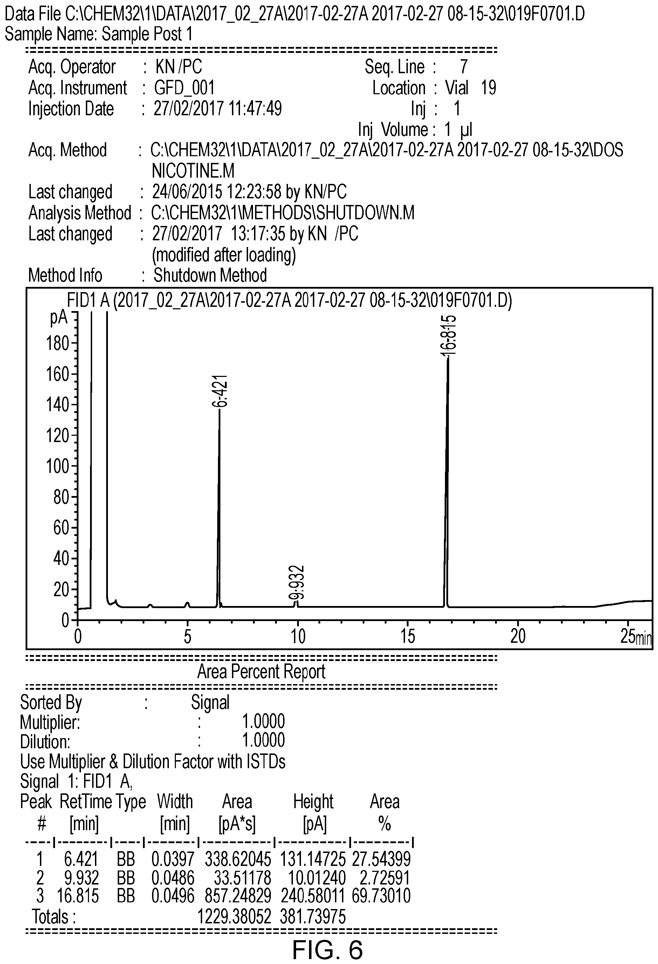

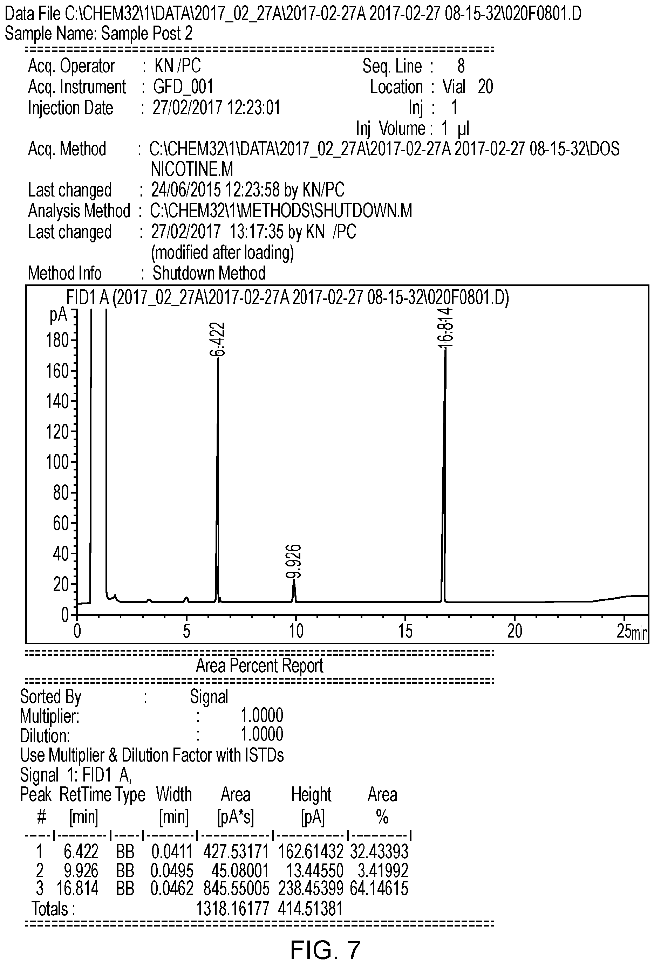

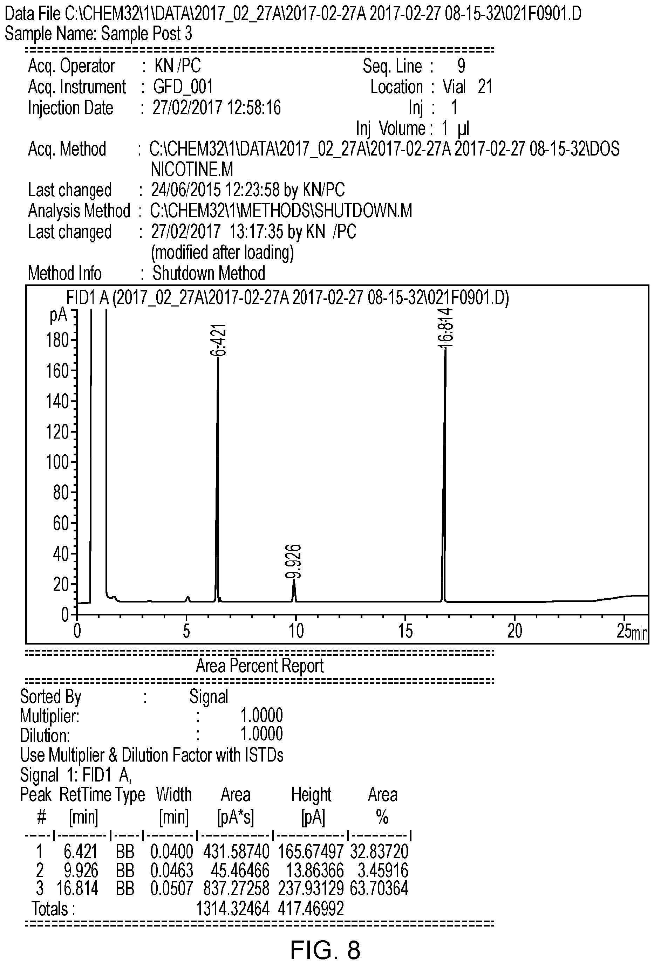

The present invention will now be described in further detail by way of example only with reference to the accompanying figure in which:-
Figures 1 to 8 each shows a chromatograph.

The invention will now be described with reference to the following non-limiting example.

### Examples

### Formulations

The following formulations were prepared.

### Composition of Candidate Formulation 1 - Menthol flavoured

| Component | % w/w |
|---|---|
| Water | 90.0 |
| 2-hydroxy-propyl-β-cyclodextrin [H PbCD] | 8.9 |
| I-menthol | 0.9 |
| nicotine | 0.1 |

### Composition of Candidate Formulation 2 - Cherry flavoured

| Component | % w/w |
|---|---|
| Water | 97.1 |
| 2-hydroxy-propyl-β-cyclodextrin | 2.5 |
| Dark Cherry Flavour | 0.3 |
| nicotine | 0.1 |

While menthol:β-cyclodextrin complexation methods are known in the art, it was found that complexation *in situ* is favoured with 2-hydroxy-propyl-β-cyclodextrin. It is believed that this is due to the large difference in melting points between menthol (42 - 45°C) and HPbCD (~200°C). This is particularly evident with kneading, since a sticky paste is formed and is very difficult to work with. Likewise, due to enhanced solubility of HPbCD, co-precipitation was also unsuccessful.

During preparation, the formulation was stirred and warmed to approximately 40°C. This allows appropriate mixing of the components throughout the process. At this temperature, HPbCD is thermally stable, and should be added first.

Nicotine was then added. The flavour components were added last; this is due to the generally higher binding energy (vs. nicotine) with the cyclodextrin host. With the larger disparity in binding energies, the less chance of a competing complexation mechanism with nicotine. For the menthol example, the approximate binding energies are -4.13 Kcal.mol-1 (nicotine) and -5.06 Kcal.mol-1 (menthol). It should be noted that, for this example, and depending on loadings, slight precipitation of menthol may be observed on cooling from 40°C to ambient. Microfiltration is necessary in this case, to remove any excess menthol which has not formed a complex with cyclodextrin.

### Analytical Testing

Prior to panel testing, the formulations were subjected to a vibrating mesh to form an aerosol. Analytical testing was then conducted on the formulation pre- and post- vibrating mesh. The chromatographs showed no evidence of component breakdown or degradation. Additionally, there were no traces of components not present in the base recipe, which may provide early insight to formulation stability. Figure 1 shows a chromatograph for a blank and Figure 2 shows a chromatograph for nicotine. Figures 3, 4 and 5 show analytical testing for 3 formulations pre-vibrating mesh. Figures 6, 7 and 8 show analytical testing for 3 formulations post-vibrating mesh.

There was not a significant difference in the peak heights of menthol or nicotine pre- and post- mesh. This suggests that the components are readily released from the complexed upon energy transfer from the vibrating mesh, then re-complex in the collection vessel post-capture. This is consistent with sensory findings where the flavour transfer is quick, implying quick initial release from the complex system.

### Observational Testing

Observational testing was conducted using the described menthol candidate formulation, as a comparative example not in accordance with the present invention.

The findings are documented below. Flavour delivery was generally more favourable for the menthol variant vs the prior art (commercial) example.

8 sessions took place and 8 volunteers participated. Volunteers were asked to use three samples in total:
the above 2 water based formulations (above) formed into an aerosol using "eFlow Rapid device". The eFlow Rapid is a reusable electronic inhalation system, used in the pharmaceutical industry for the treatment of diseases of the respiratory system and lungs. It is suitable for temporary oral inhalation of aqueous solutions typically prescribed or recommended by a doctor for use in the home. The device achieves its purpose through continuous aerosol delivery.
(eFlow rapid nebuliser system (www.pari.com)) and the above described comparative example.

### Results

Compared to the prior art example, formulation 1 in accordance with the present invention was found to provide a) good, strong flavour, b) best menthol taste experienced, c) cool, refreshing, d) good menthol hit, e) pleasant taste in mouth after, f) goes well with cool vapour, g) nice sensory experience, h) clears nose, and i) refreshing taste at end.

The tested examples also had lower nicotine levels than is typically delivered in electronic cigarettes. The user panel were surprised when advised of this and it was considered that lower nicotine levels were more acceptable to users from a sensory perspective when delivered in the high water system of the present invention. This would allow users to reduce their nicotine intake without detriment to the sensory perception of the product.

## Claims

1. An aerosolisable formulation comprising
(i) water in an amount of at least 70 wt.% based on the aerosolisable formulation ;
(ii) one or more flavours;
(iii) one or more cyclodextrins; and
(iv) nicotine.

2. An aerosolisable formulation according to claim 1 wherein water is present in an amount of at least 75 wt.% based on the aerosolisable formulation .

3. An aerosolisable formulation according to claim 1 or 2 wherein water is present in an amount of at least 90 wt.% based on the aerosolisable formulation .

4. An aerosolisable formulation according to claim 1, 2 or 3 wherein the one or more flavours are selected from the group consisting of (4-(para-)methoxyphenyl)-2-butanone, vanillin, γ-undecalactone, menthone, 5-propenyl guaethol, menthol, para-mentha-8-thiol-3-one and mixtures thereof; such as wherein the flavour is at least menthol.

5. An aerosolisable formulation according to any one of claims 1 to 4 wherein the one or more flavours are present in a total amount of no greater than 2wt.% based on the aerosolisable formulation; such as wherein the one or more flavours are present in a total amount of from 0.01 to 1wt.% based on the aerosolisable formulation.

6. An aerosolisable formulation according to any one of claims 1 to 5 wherein the one or more cyclodextrins are selected from the group consisting of substituted or unsubstituted (α)-cyclodextrin, substituted or unsubstituted (β)-cyclodextrin, substituted or unsubstituted (γ)-cyclodextrin, and mixtures thereof; such as wherein the one or more cyclodextrins is at least 2-hydroxy-propyl-β-cyclodextrin.

7. An aerosolisable formulation according to any one of claims 1 to 6 wherein the one or more cyclodextrins are present in a total amount of no greater than 10wt.% based on the aerosolisable formulation; such as wherein the one or more cyclodextrins are present in a total amount of from 2 to 9 wt.% based on the aerosolisable formulation.

8. An aerosolisable formulation according to any one of claims 1 to 7 wherein nicotine is present in an amount of no greater than 1.8wt.% based on the aerosolisable formulation; such as wherein nicotine is present in an amount of from 0.1 to 1wt.% based on the aerosolisable formulation .

9. A process for forming an aerosol, the process comprising aerosolising an aerosolisable formulation as defined in any one of claims 1 to 8.

10. A process according to claim 9 wherein the aerosol is formed by a process performed at a temperature below 50°C and/or wherein the aerosol is formed by applying ultrasonic energy to the aerosolisable formulation.

11. A contained aerosolisable formulation comprising
(a) a container; and
(b) an aerosolisable formulation as defined in any one of claims 1 to 8.

12. An electronic aerosol provision system comprising:
(a) an aerosoliser for aerosolising formulation for inhalation by a user of the electronic aerosol provision system;
(b) a power supply comprising a cell or battery for supplying power to the aerosoliser
(c) an aerosolisable formulation , comprising
(i) water in an amount of at least 70 wt.% based on the aerosolisable formulation;
(ii) one or more flavours; and
(iii) one or more cyclodextrins.

13. An electronic aerosol provision system according to claim 12 wherein the aerosolisable formulation further comprises an active agent; such as wherein the active agent is at least nicotine.

14. An electronic aerosol provision system according to claim 13 wherein the aerosolisable formulation is an aerosolisable formulation as defined in any one of claims 2 to 8.

15. Use of one or more cyclodextrins for delivering a flavour in an aerosol, wherein the aerosol is formed by aerosolising an aerosolisable formulation comprising
(i) water in an amount of at least 70 wt.% based on the aerosolisable formulation ;
(ii) one or more flavours;
(iii) one or more cyclodextrins; and
(iv) nicotine
at a temperature below 50°C.

## Patentansprüche

1. Aerosolisierbare Formulierung, umfassend
(i) Wasser in einer Menge von mindestens 70 Gew.-% der aerosolisierbaren Formulierung,
(ii) einen oder mehrere Geschmacksstoffe,
(iii) einen oder mehrere Cyclodextrine und
(iv) Nicotin.

2. Aerosolisierbare Formulierung nach Anspruch 1, in der Wasser in einer Menge von mindestens 75 Gew.-% der aerosolisierbaren Formulierung vorhanden ist.

3. Aerosolisierbare Formulierung nach Anspruch 1 oder 2, in der Wasser in einer Menge von mindestens 90 Gew.-% der aerosolisierbaren Formulierung vorhanden ist.

4. Aerosolisierbare Formulierung nach Anspruch 1, 2 oder 3, wobei der eine oder die mehreren Geschmacksstoffe aus der aus(4-(para-)Methoxyphenyl)-2-butanon, Vanillin, γ-Undecalacton, Menthon, 5-Propenylguaethol, Menthol, para-Mentha-8-thiol-3-on und Mischungen davon bestehenden Gruppe ausgewählt sind, wobei es sich bei dem Geschmacksstoff mindestens um Menthol handelt.

5. Aerosolisierbare Formulierung nach einem der Ansprüche 1 bis 4, wobei der eine oder die mehreren Geschmacksstoffe in einer Gesamtmenge von nicht mehr als 2 Gew.-% der aerosolisierbaren Formulierung vorhanden sind, wobei der eine oder die mehreren Geschmacksstoffe beispielsweise in einer Gesamtmenge von 0,01 Gew.-% bis 1 Gew.-% der aerosolisierbaren Formulierung vorhanden sind.

6. Aerosolisierbare Formulierung nach einem der Ansprüche 1 bis 5, wobei der eine oder die mehreren Cyclodextrine aus der aus substituiertem oder unsubstituiertem (α)-Cyclodextrin, substituiertem oder unsubstituiertem (β)-Cyclodextrin, substituiertem oder unsubstituiertem (γ)-Cyclodextrin und Mischungen davon bestehenden Gruppe ausgewählt sind, wobei es sich bei dem einen oder den mehreren Cyclodextrinen mindestens um 2-Hydroxypropyl-β-cyclodextrin handelt.

7. Aerosolisierbare Formulierung nach einem der Ansprüche 1 bis 6, wobei der eine oder die mehreren Cyclodextrine in einer Gesamtmenge von nicht mehr als 10 Gew.-% der aerosolisierbaren Formulierung vorhanden sind, wobei der eine oder die mehreren Cyclodextrine beispielsweise in einer Gesamtmenge von 2 Gew.-% bis 9 Gew.-% der aerosolisierbaren Formulierung vorhanden sind.

8. Aerosolisierbare Formulierung nach einem der Ansprüche 1 bis 7, wobei das Nicotin in einer Menge von nicht mehr als 1,8 Gew.-% der aerosolisierbaren Formulierung vorhanden ist, wobei Nicotin beispielsweise in einer Menge von 0,1 bis 1 Gew.-% der aerosolisierbaren Formulierung vorhanden ist.

9. Verfahren zur Bildung eines Aerosols, wobei das Verfahren das Aerosolisieren einer wie in einem der Ansprüche 1 bis 8 definierten aerosolisierbaren Formulierung umfasst.

10. Verfahren nach Anspruch 9, wobei das Aerosol durch ein bei einer Temperatur unter 50 °C durchgeführtes Verfahren gebildet wird und/oder wobei das Aerosol durch Anwendung von Ultraschallenergie auf die aerosolisierbare Formulierung gebildet wird.

11. In einem Behälter befindliche aerosolisierbare Formulierung, umfassend:
(a) einen Behälter und
(b) eine wie in einem der Ansprüche 1 bis 8 definierte aerosolisierbare Formulierung.

12. Elektronisches Aerosolbereitstellungssystem, umfassend:
(a) einen Vernebler für eine Aerosolformulierung zur Inhalation durch einen Benutzer des elektronischen Aerosolbereitstellungssystems,
(b) eine Stromversorgung, die eine Zelle oder eine Batterie zur Versorgung des Verneblers mit Strom umfasst,
(c) eine aerosolisierbare Formulierung, umfassend:
(i) Wasser in einer Menge von mindestens 70 Gew.-% der aerosolisierbaren Formulierung,
(ii) einen oder mehrere Geschmacksstoffe und
(iii) einen oder mehrere Cyclodextrine.

13. Elektronisches Aerosolbereitstellungssystem nach Anspruch 12, wobei die aerosolisierbare Formulierung weiterhin einen Wirkstoff umfasst, wobei es sich bei dem Wirkstoff beispielsweise mindestens um Nicotin handelt.

14. Elektronisches Aerosolbereitstellungssystem nach Anspruch 13, wobei es sich bei der aerosolisierbaren Formulierung um eine wie einem der Ansprüche 2 bis 8 definierte aerosolisierbare Formulierung handelt.

15. Verwendung eines oder mehrerer Cyclodextrine zur Abgabe eines Geschmacksstoffs in einem Aerosol, wobei das Aerosol durch Aerosolisieren einer aerosolisierbaren Formulierung, die Folgendes umfasst:
(i) Wasser in einer Menge von mindestens 70 Gew.-% der aerosolisierbaren Formulierung,
(ii) einen oder mehrere Geschmacksstoffe,
(iii) einen oder mehrere Cyclodextrine und
(iv) Nicotin
bei einer Temperatur unter 50 °C gebildet wird.

## Revendications

1. Formulation aérosolisable comprenant
(i) de l'eau en une quantité d'au moins 70 % en poids sur la base de la formulation aérosolisable ;
(ii) un ou plusieurs arômes ;
(iii) une ou plusieurs cyclodextrines ; et
(iv) de la nicotine.

2. Formulation aérosolisable selon la revendication 1, dans laquelle l'eau est présente en une quantité d'au moins 75 % en poids sur la base de la formulation aérosolisable.

3. Formulation aérosolisable selon la revendication 1 ou 2, dans laquelle l'eau est présente en une quantité d'au moins 90 % en poids sur la base de la formulation aérosolisable.

4. Formulation aérosolisable selon la revendication 1, 2 ou 3, dans laquelle l'arôme ou les arômes sont sélectionnés dans le groupe constitué par (4-(para-)méthoxyphényl)-2-butanone, vanilline, γ-undécalactone, menthone, 5-propényl guaéthol, menthol, para-mentha-8-thiol-3-one et des mélanges correspondants ; par exemple, dans laquelle l'arôme est au moins le menthol.

5. Formulation aérosolisable selon l'une quelconque des revendications 1 à 4, dans laquelle l'arôme ou les arômes sont présents en une quantité totale non supérieure à 2 % en poids sur la base de la formulation aérosolisable ; par exemple, dans laquelle l'arôme ou les arômes sont présents en une quantité totale allant de 0,01 % à environ 1 % en poids sur la base de la formulation aérosolisable.

6. Formulation aérosolisable selon l'une quelconque des revendications 1 à 5 dans laquelle la ou les cyclodextrines sont sélectionnées dans le groupe constitué par une (α)-cyclodextrine substituée ou non substituée, une (β)-cyclodextrine substituée ou non substituée, une (γ)-cyclodextrine substituée ou non substituée et des mélanges correspondants) ; par exemple, dans laquelle la ou les cyclodextrines sont au moins la 2-hydroxypropyl-β-cyclodextrine.

7. Formulation aérosolisable selon l'une quelconque des revendications 1 à 6, dans laquelle la ou les cyclodextrines sont présentes en une quantité totale non supérieure à 10 % en poids sur la base de la formulation aérosolisable ; par exemple, dans laquelle la ou les cyclodextrines sont présentes en une quantité totale allant de 2 à 9 % en poids sur la base de la formulation aérosolisable.

8. Formulation aérosolisable selon l'une quelconque des revendications 1 à 7, dans laquelle la nicotine est présente en une quantité non supérieure à 1,8 % en poids sur la base de la formulation aérosolisable ; par exemple, dans laquelle la nicotine est présente en une quantité allant de 0,1 à 1 % en poids sur la base de la formulation aérosolisable.

9. Procédé de formation d'un aérosol, le procédé comprenant l'aérosolisation d'une formulation aérosolisable telle que définie dans l'une quelconque des revendications 1 à 8.

10. Procédé selon la revendication 9, dans lequel l'aérosol est formé par un procédé réalisé à une température inférieure à 50 °C, et/ou dans lequel l'aérosol est formé en appliquant de l'énergie ultrasonique à la formulation aérosolisable.

11. Formulation aérosolisable contenue comprenant
(a) un récipient ; et
(b) une formulation aérosolisable telle que définie dans l'une quelconque des revendications 1 à 8.

12. Système électronique de fourniture d'aérosol comprenant :
(a) un aérosolisateur pour aérosoliser une formulation pour une inhalation par un utilisateur du système électronique de fourniture d'aérosol ;
(b) une alimentation électrique comprenant une cellule ou une batterie pour fournir de l'énergie à l'aérosolisateur
(c) une formulation aérosolisable comprenant
(i) de l'eau en une quantité d'au moins 70 % en poids sur la base de la formulation aérosolisable ;
(ii) un ou plusieurs arômes ; et
(iii) une ou plusieurs cyclodextrines.

13. Système électronique de fourniture d'aérosol selon la revendication 12, dans lequel la formulation aérosolisable comprend en outre un agent actif ; par exemple, dans lequel l'agent actif est au moins de la nicotine.

14. Système électronique de fourniture d'aérosol selon la revendication 13, dans lequel la formulation aérosolisable est une formulation aérosolisable telle que définie dans l'une quelconque des revendications 2 à 8.

15. Utilisation d'une ou plusieurs cyclodextrines pour apporter un arôme dans un aérosol, dans laquelle l'aérosol est formé par aérosolisation d'une formulation aérosolisable comprenant
(i) de l'eau en une quantité d'au moins 70 % en poids sur la base de la formulation aérosolisable ;
(ii) un ou plusieurs arômes ;
(iii) une ou plusieurs cyclodextrines ; et
(iv) de la nicotine
à une température inférieure à 50 °C.
